# EUROPEAN PATENT APPLICATION

(11) **EP 4 843 760 A1**
(43) Date of publication of application: **25.11.2026**
(21) Application number: 26160451.6
(22) Date of filing: 24.02.2026
(51) Int. Cl.: B29C 70/38, B29C 70/54

(54) **SYSTEMS AND METHODS FOR SELECTIVELY HEATING INDIVIDUAL TOWS OF A COURSE**

(30) Priority: 21.05.2025 US 202519214287
(71) Applicant: The Boeing Company, Arlington, VA 22202 (US)
(72) Inventor: GHOSE, Sayata, Arlington, 22202 (US); JOHNSON, Brice A., Arlington, 22202 (US); WIENHOLD, Erik N., Arlington, 22202 (US); BINDER, Joshua R., Arlington, 22202 (US)
(74) Representative: Boult Wade Tennant LLP

(57) **Abstract**

A method for controlling tack level of composite tows during placement includes steps of: (1) receiving an input parameter for each one of a plurality of composite tows; (2) determining, based on the input parameter, a heating profile for each one of the composite tows to achieve a desired tack for each one of the composite tows; (3) locally heating each one of the composite tows according to the heating profile of a corresponding one of the composite tows; and (4) achieving the desired tack for each one of the composite tows.

## Description

### FIELD

The present disclosure relates generally composite manufacturing and, more particularly, to systems and methods for individually heating each one of a plurality of composite tows during placement of a course using material history to selectively control a tack level of each composite tow.

### BACKGROUND

Multi-layer laminates of constituent material (e.g., Carbon Fiber Reinforced Polymer (CFRP)) may be formed into any of a variety of shapes for curing into a composite part. To facilitate the fabrication of composite parts, a robot such as an automated fiber placement (AFP) machine may be utilized. For example, an AFP machine may lay up one or more layers of tows of constituent material that form a laminate, which is then cured. To ensure that tows being placed by an AFP machine properly adhere to the underlying laminate, a heater at the AFP machine heats the laminate. Heating the laminate ensures that the tows will properly form and adhere to the laminate at a desired level of tack. However, material properties such as tack and drapability are sensitive to material history, such as material out-time and composition, which can vary among the different tows of a course being placed. Existing heaters lack the ability to control heater output on a per tow basis to account for material history or otherwise achieve the desired level of tack. Accordingly, those skilled in the art continue with research and development efforts in the field of composite manufacturing that enhance the heating process.

### SUMMARY

Disclosed are examples of a method for selectively heating composite tows during placement, methods for achieving a desired tack in composite tows; and a system for selectively heating composite tows during placement, such as to control the level of tack or achieve a desired tack of each composite tow. The following is a non-exhaustive list of examples, which may or may not be claimed, of the subject matter according to the present disclosure.

In some examples, the disclosed method for selective heating includes steps of: (1) receiving an input parameter for each one of a plurality of composite tows; (2) determining, based on the input parameter, a heating profile for each one of the composite tows to achieve a desired tack for each one of the composite tows; (3) locally heating each one of the composite tows according to the heating profile of a corresponding one of the composite tows; and (4) achieving the desired tack for each one of the composite tows.

In some examples, the disclosed method for selective includes steps of: (1) receiving an input parameter for each one of a plurality of composite tows; (2) determining, based on the input parameter, a heating profile for each one of the composite tows to achieve a desired tack for each one of the composite tows; and (3) individually controlling each one of a plurality of heaters according to the heating profile of a corresponding one of the composite tows to apply localized heating to each one of the composite tows and achieve the desired tack.

In some examples, the disclosed method for achieving desired tack includes steps of: (1) determining, based on at least one input parameter, a heating profile for each one of a plurality of composite tows to achieve the desired tack for each one of the composite tows; and (2) differentially heating the composite tows according to the heating profile of each one of the composite tows.

In some examples, the disclosed system includes a placement machine. The placement machine includes a guide and a plurality of heaters. The guide dispenses a course of composite tows onto a surface. Each one of the heaters is independently controllable and is positioned to locally heat a corresponding one of the composite tows. The system also includes a controller. The controller is adapted to receive an input parameter for each one of the composite tows. The controller is adapted to determine, based on the input parameter, a heating profile for each one of the composite tows to achieve a desired tack for each one of the composite tows. The controller is adapted to individually control each one of the heaters according to the heating profile of the corresponding one of the composite tows to apply localized heating to each one of the composite tows and achieve the desired tack.

Other examples of the method and system will become apparent from the following detailed description, the accompanying drawings, and the appended claims.

### BRIEF DESCRIPTION OF THE DRAWINGS

Fig. 1 is a flow diagram of an example of a method for selectively heating composite tows during placement;
Fig. 2 is a schematic block diagram of an example of a system for selectively heating composite tows during placement;
Fig. 3 is a top plan view of an example of placement machine of the system;
Fig. 4 is a perspective view of an example of placement machine;
Fig. 5 is a schematic block diagram of an example of a data processing system;
Fig. 6 is a schematic block diagram of an example of an aircraft; and
Fig. 7 is a flow diagram of an example of an aircraft manufacturing and service method.

### DETAILED DESCRIPTION

Generally, the following detailed description describes a method and associated system for selectively heating a pre-impregnated composite material during placement, for example, to control a tack level of or achieve a desired tack for the pre-impregnated composite material. Throughout the present disclosure, the pre-impregnated composite material may also be referred to as a prepreg material or prepreg composite (e.g., prepreg material 212). Examples of the method and system provide for applying localized, tow-level heating during placement of prepreg materials, such as during automated fiber placement (AFP). Examples of the method and system utilize material out-times and desired tack levels of the prepreg materials as processing parameters to control the heat applied to individual tows of the prepreg materials during placement. In some examples, the method and system can also utilize material tack properties derived from testing (e.g., ASTM D8336), material placement rates, and other parameters.

The present disclosure recognizes that conventional heating systems used when forming composite laminates, such as in automated fiber placement processes, apply a uniform heating profile across all tows of a course, irrespective of the individual prepreg material's out-time or associated tack characteristics. Additionally, existing heating systems are limited in their ability to independently control thermal output on a per-tow basis. Further, existing heater control architectures lack the capability to accept input related to material tack data or out-time information.

Examples of the method and system, disclosed herein, provide the capability to independently control heating intensity at the tow level. This functionality enables fine-tuned thermal conditioning of each tow during deposition, based on specific predetermined material characteristics. Accordingly, examples of the method and system, disclosed herein, enable advanced tow-by-tow thermal management, ensuring consistent material handling and laminate quality, even under varying material conditions within a single course.

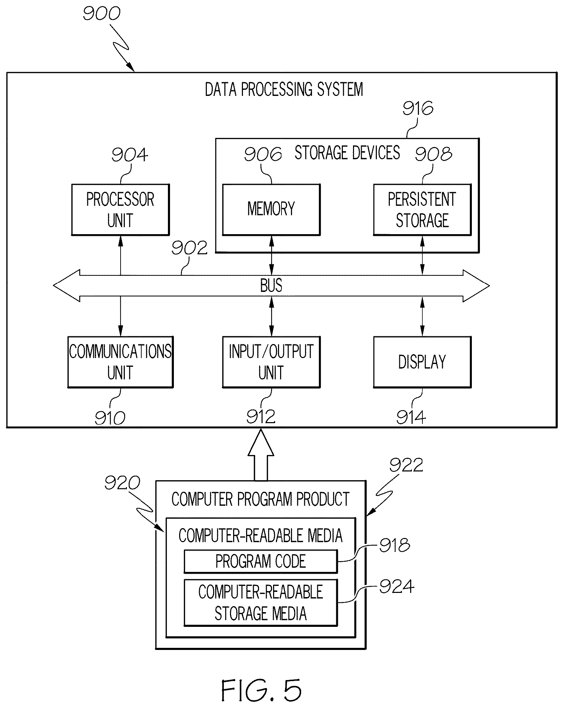

In one or more examples, the method and system utilize standardized tack data to determine the laydown temperature required for a given material out-time and placement speed. The method and system calculate and/or set the appropriate heat input per tow by referencing the tack data and correlating it with the material's out-time. This enables the simultaneous processing of multiple prepreg tows within a single placement course, while accommodating one or more tows having a distinct or differing out-time. A key feature of this implementation is a user interface or data management system (e.g., data processing system 900 in Fig. 5) that allows an operator to input and/or automatically track the out-time of each individual spool of prepreg material used in production. This information is used to dynamically adjust the heat output of each heater corresponding to each tow, thereby ensuring a desired tack across differing tows of differing material history.

In one or more examples, the method and system utilize a user-defined setpoint on a master tack curve, which corresponds to a target tack value. Based on a placement speed and a position along the master tack curve selected by the user, the method and system determine and control the appropriate laydown temperature for each tow of the course. In various examples, the heat control can be executed in either an open-loop configuration, utilizing pre-calibrated power-to-temperature curves, or in a closed-loop configuration using real-time temperature feedback.

In one or more examples, the method and system also utilize laydown temperature sensing for each heated and deposited tow. In these examples, rather than averaging temperature across the course, the method and system compute an average temperature for each tow individually. In one or more examples, these values serve as inputs to each heater, which modulates the heater power output to maintain the setpoint or target temperature of the corresponding tow or lane. As a result, when different tows require different optimal tack temperatures due to variations in out-time or material properties, distinct temperature setpoints can be established and precisely achieved for each tow or lane. Alternatively, or additionally, in one or more examples, the method and system utilize a single heater for all of the composite tows, but individual tow data (e.g., material out time) is considered to select an optimal single heater solution that works for all of the composite tows.

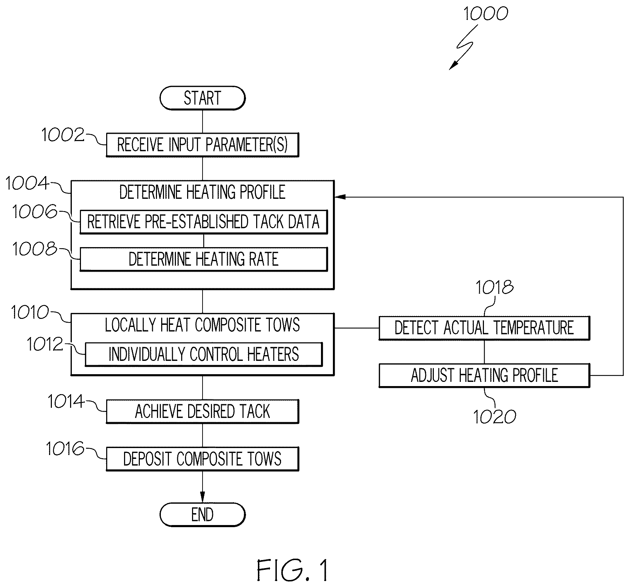

Referring to Fig. 1, by way of examples, present disclosure is directed to method 1000. In various examples, method 1000 is for selectively controlled heating of composite tows during placement, for example, to control tack or other material properties. In various examples, method 1000 is for achieving a desired tack in each one of a plurality of composite tows being placed through differential heating according to at least one material input parameter, such as material out time. The following are examples of method 1000, according to the present disclosure. Examples of method 1000 include a number of elements, steps, operations, or processes or combinations thereof. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein. The elements, steps, operations, or processes need not necessarily be performed in the specific order(s) they are described and/or depicted.

In one or more examples, method 1000 includes, at 1002, a step of receiving input parameter 110 for each one of a plurality of composite tows 200. Examples of method 1000 and associated system 100 enable the dynamic reception one or more input parameters 110 associated with composite laminate manufacturing. In one or more examples, input parameter 110 is transmitted to a process controller (e.g., controller 150) or other data management system prior to or during placement of composite tows 200. Utilization of input parameter 110 enables increased process adaptability and accuracy, enhances automation, and real-time quality control.

Generally, in composite laminate manufacturing, the terms tow and course refer to elements of a fiber reinforcement system, particularly when using automated fiber placement (AFP) or automated tape laying (ATL) processes. As used herein, tow has its ordinary meaning and includes or takes the form of a bundle, ribbon, tape, etc. of continuous filaments (e.g., carbon, glass, or aramid fibers). In some examples including the present examples, a tow is also pre-impregnated with resin. Multiple tows can be placed side-by-side to create a wider band of material. As used herein, course has its ordinary meaning and refers to a single pass or path of two or more tows that are laid down or placed simultaneously on a tool surface or a previously placed layer of material during a composite layup process. Multiple courses, laid in particular orientations and sequences, make up a laminate stack.

In one or more examples, according to method 1000, input parameter 110 includes material out-time 114 corresponding to each one of composite tows 200. In other words, each one of composite tows 200 has an associated material out-time 114. For the purpose of the present disclosure, "out-time" has its ordinary meaning as known to those skilled in the art and refers to the cumulative duration during which a pre-impregnated ("prepreg") material is exposed to ambient conditions outside of its recommended storage environment.

In one or more examples, material out-time 114 is measured (e.g., in hours and/or minutes). In one or more examples, material out-time 114 is recorded. In one or more examples, material out-time 114 is stored in the memory of the process controller (e.g., controller 150) or other data management system, such as memory 906 of data processing system 900 (Fig. 5). In one or more examples, material out-time 114 is provided or transmitted to controller 150 as an operational input (e.g., input parameter 110) for the placement process.

Prepreg materials 212 (e.g., composite tows 200) are typically stored at temperatures intended to inhibit resin cure advancement and preserve tack and handling characteristics. In certain circumstances, once removed from storage, the matrix material (e.g., resin) may begin to advance chemically and/or lose optimal processing characteristics. Without being bound to any particular theory, it is believed that out-time directly affects certain properties of the prepreg material, such as tack, drape, and/or the material's ability to conform to tooling and/or adhere or bond to underlying layers during layup. It is also believed that an increase in the out-time results in an associated decrease in the tack of a prepreg material, which requires a higher heat input during placement of the prepreg material. As examples, a long duration out-time can result in reduced tack, resin degradation, and/or premature curing, all of which can compromise laminate quality. For thermoset prepregs, managing out-time, for example, within predetermined limits because material characteristics such as tack can vary, is essential for ensuring proper consolidation, interlaminar adhesion, and final part performance.

In one or more examples, input parameter 110 includes material composition 116 corresponding to each one of composite tows 200. In other words, each one of composite tows 200 has an associated material composition 116. Material composition 116 refers to the specific makeup or composition of the materials used to create each one of composite tows 200. Typically, material composition 116 of a prepreg composite tow is a combination of fibers (e.g., fiber 206) and matrix materials (e.g., matrix 208). Material composition directly affects certain properties of prepreg material 212 (e.g., composite tows 200), such as tack, drape, and/or the material's ability to conform to tooling and/or adhere or bond to underlying layers during layup. As examples, different material compositions can have different levels of tack at different temperatures or under different heating profiles.

In one or more examples, input parameter 110 includes heat duration 118 corresponding to each one of composite tows 200. In one or more examples, heat duration 118 refers to the time interval during which a localized area of each one of composite tows 200 is exposed to a controlled thermal energy input sufficient to raise its temperature to a level necessary for effective fiber adhesion, consolidation, or in-situ curing during placement, for example, during the AFP process. In one or more examples, heat duration 118 is determined from the moment the applied heat source (e.g., from heaters 130) begins actively delivering energy to a target zone until the cessation of heating for that zone, for example, as placement machine 102 traverses along a programmed path.

In one or more examples, input parameter 110 includes target temperature 164 corresponding to each one of composite tows 200. In one or more examples, target temperature 164 refers to the predetermined surface or interfacial temperature that prepreg material 212 must achieve during the placement process to ensure proper tape tackiness, consolidation, adhesion or bonding between plies, and, where applicable, partial or full resin curing. In AFP examples, target temperature 164 is established based on the specific material system (e.g., thermoset prepreg, thermoplastic tape, etc.) and the intended process phase (e.g., tack adhesion or bonding, in-situ consolidation, or structural curing). It is achieved by applying localized heating before and/or during deposition of composite tows 200 by placement machine 102.

In one or more examples, input parameter 110 includes placement speed 122 corresponding to each one of composite tows 200. In one or more examples, placement speed 122 (also referred to as feed rate) is the linear velocity at which placement machine 102 moves relative to surface 220 (e.g., tool surface, substrate surface, or previously placed laminate layer) during the deposition of composite tows 200 (e.g., composite fiber tows or tapes). In one or more examples, placement speed 122 directly governs material deposition and/or impacts the thermal profile of composite tows 200 being placed. In one or more examples, placement speed 122 directly affects material tack, such that higher placement speeds can require higher heat to achieve the same level of tack as compared to lower speeds and less heat.

In one or more examples, heat duration 118 is based on placement speed 122 of course 210 of composite tows 200. As such, in one or more examples, placement speed 122 is synchronized with the heating power or heat output (e.g., heating rate 158) of each one of heaters 130 corresponding to composite tows 200.

In one or more examples, according to method 1000, the input parameter 110 is one of a plurality of input parameters 110. In these examples, input parameters 110 include at least two of material out-time 114, material composition 116, and heat duration 118 corresponding to each one of the composite tows 200. In other examples, input parameters 110 also include at least one of target temperature 164 and placement speed 122 corresponding to each one of composite tows 200.

In one or more examples, method 1000 includes, at 1004, a step of determining heating profile 112 for each one of composite tows 200 to achieve desired tack 202 for each one of composite tows 200. Throughout the present disclosure, tack refers to the surface stickiness or adhesive strength of a prepreg material (e.g., a fiber-reinforced composite impregnated with a resin matrix) that enables it to temporarily adhere to a substrate, adjacent tows, or underlying plies during placement or layup operations prior to final curing or consolidation. As will be described in more detail herein, tack is depending upon temperature, out-time, placement speed, and material composition. Throughout the present disclosure tack may also be referred to as tack level. In one or more examples, quantification of tack can be referred to as a tack value (e.g., tack value 156).

The present disclosure recognizes that there are two types of tack according to the Williams-Landel-Ferry (WLF) equation for the material processed. The WLF equation and resin rheology measurements can be used for a time temperature superposition to generate a master tack curve (master tack curve 166). The two zones are in the master tack curve. In one or more examples in which a tack value is less than peak tack, for any tack value there is either a cohesive or an adhesive failure mode of the material when measured during the tack testing. The colder or faster conditions tend towards adhesive failures when peeled, and the slower or hotter conditions result in cohesive failure of the matrix when peeled. Typical processes would be operating on the adhesive failure side of the tack curve, to minimize heat requirement, and simplify rework if needed. For some unique situations, processing at peak or past peak into cohesive failure region of the curve may be a desired condition, for example, in order to reduce bulk factor, improve consolidation, or maximize adhesion of the material when laying along a curved path that requires tight in-plane steering of the material.

In one or more examples, input parameter 110 includes a percentage of peak tack that can be used. In these examples, controller 150 uses ASTM data to determine heater settings for a given feed rate (e.g., placement speed 122). As an example, 40%, 60%, 80% of peak tack on the adhesive failure side of master tack curve 166 could be the set point that the heater controller drives power to each one of heaters 130 using master tack curve 166 as an input. In other examples, peak tack can be selected, or percent of peak tack on a cohesive failure side of the master tack curve for better consolidation or other benefit.

In one or more examples, heating profile 112 is determined based on one or more of input parameters 110. In one or more examples, heating profile 112 is determined based on tack data 154. In one or more examples, heating profile 112 is determined based on master tack curve 166. In one or more examples, heating profile 112 refers to the spatial and temporal distribution of temperature experienced by any one of composite tows 200 as it is subjected to localized thermal energy input during its deposition onto surface 220. More specifically, in one or more examples, heating profile 112 characterizes how the tow's surface and internal temperature evolve as a function of position along layup path (e.g., path 222) and time, beginning from the point of initial exposure to the heat source, through the peak heating event, and into subsequent cooling after placement.

In one or more examples, according to method 1000, the step of determining heating profile 112 includes, at 1006, a step of retrieving tack data 154 (may also be referred to as pre-established tack data 154). In one or more examples, tack data 154 is retrieved from database 152. In one or more examples, tack data 154 is retrieved based on or corresponds to input parameter 110 associated with each one of composite tows 200. In one or more examples, heating profile 112 and/or tack data 154 are used as parameters to individually and selectively control (e.g., vary) the power output of each one of heaters 130 associated with each one of composite tows 200.

In one or more examples, at least some portion of tack data 154 is generated based on testing information of various types of prepreg materials to determine the amount of heat needed to achieve desired tack 202 of prepreg material 212, for example, based on material history 124, such as out-time 114, material composition 116, and the like. As such, when material history 124 (e.g., out-time 114) is known, examples of method 1000 and system 100 enable selective control and adjustment of the heat applied per tow to achieve desired tack 202 based upon tack data 154 (e.g., tack testing data).

In one or more examples, pre-established tack data 154 is standardized tack data. As an example, pre-established tack data 154 takes the form of or is represent by one or more master tack curves 166. In these examples, master tack curve 166 is a graphical representation of tack data 154 or of how tack changes under different conditions, such as temperature (e.g., material temperature 204), feed rate (e.g., placement speed 122), and time (e.g., out-time 114).

In one or more examples, pre-established tack data 154 (e.g., master tack curve 166) is measured, quantified, or generated according to ASTM D8336-24. In these examples, ASTM D8336-24 is a standard test method for characterizing tack of prepregs using a continuous application-and-peel procedure, published by ASTM International. The method measures the adhesion (tack) of partially cured (B-staged) composite prepreg materials under specific conditions. However, generation of pre-established tack data 154 and/or master tack curve 166 is not limited to any particular testing method and can be measured, quantified, or generated according to any suitable testing method.

In one or more examples, according to method 1000, the step of determining heating profile 112 includes, at 1008, a step of determining heating rate 158 needed to achieve desired tack 202 based on pre-established tack data 154 of a corresponding one of composite tows 200. In one or more examples, heating rate 158 refers to the rate at which thermal energy is delivered to a localized region of composite tows 200 during the placement process. In one or more examples, heating rate 158 characterizes the intensity and speed of heating that affects the tow's surface and near-surface temperatures as it passes through a corresponding heating zone, for example, of an associated one of heaters 130.

In one or more examples, heating rate 158 includes or provides heat input 142 needed per composite tow 200 to achieve desired tack 202. In one or more examples, heat input 142 is calculated by referencing tack data 154 (e.g., in the form of tack master curve 166) and is correlated with material out-time 114 of the corresponding one of composite tows 200. In these examples, heat input 142 refers to the total amount of thermal energy delivered to a specific area or volume of one of composite tows 200 during the placement process to achieve desired tack 202 or other processing condition.

In one or more examples, heating rate 158 includes or provides heat output 144 generated by each one of heaters 130 needed per composite tow 200 to achieve desired tack 202. In one or more examples, heat output 144 is calculated by referencing tack data 154 (e.g., in the form of tack master curve 166) and is correlated with material out-time 114 of the corresponding one of composite tows 200. In these examples, heat output 144 refers to the amount of thermal energy emitted by each one of heaters 130 and made available for transfer to a corresponding one of composite tows 200 during the placement process.

In one or more examples, according to method 1000, pre-established tack data 154 includes tack values 156 as a function of at least one of material out-time 114 and material composition 116. In one or more examples, tack values 156 are shifted as a function of placement speed 122 and material temperature 204 for determining heating rate 158 (e.g., heat input 142 or heat output 144). In these examples, material out-time 114, material composition 116, placement speed 122, and tack values 156 (e.g., quantification of desired tack 202) are input parameters 110, which are used to generate heating profile 112 and, thus, heating rate 158 (e.g., heat input 142 or heat output 144).

In one or more examples, according to method 1000, master tack curve 166 is input parameter 110, which is used to generate heating profile 112 and, thus, heating rate 158 (e.g., heat input 142 or heat output 144).

In one or more examples, to determine the appropriate thermal energy required to achieve sufficient tack for placement, empirical tack testing is conducted on prepreg material 212 across a range of different material out-times 114. The resulting data set (e.g., tack data 154) establishes a correlation between material out-time 114 and necessary heat input 142 to attain a consistent application tack threshold (e.g., desired tack 202). In one or more examples, during placement (e.g., AFP) operations, this correlation is employed to dynamically adjust the power delivered to each one of heaters 130, thereby tailoring the heat applied to each one of composite tows 200 in accordance with its specific material out-time 114. This approach enables precise thermal conditioning of each composite tow 200 immediately prior to placement, optimizing adhesion to surface 220 and minimizing placement defects.

In one or more examples, method 1000 includes, at 1010, a step of locally heating each one of composite tows 200 according to heating profile 112 of a corresponding one of composite tows 200.

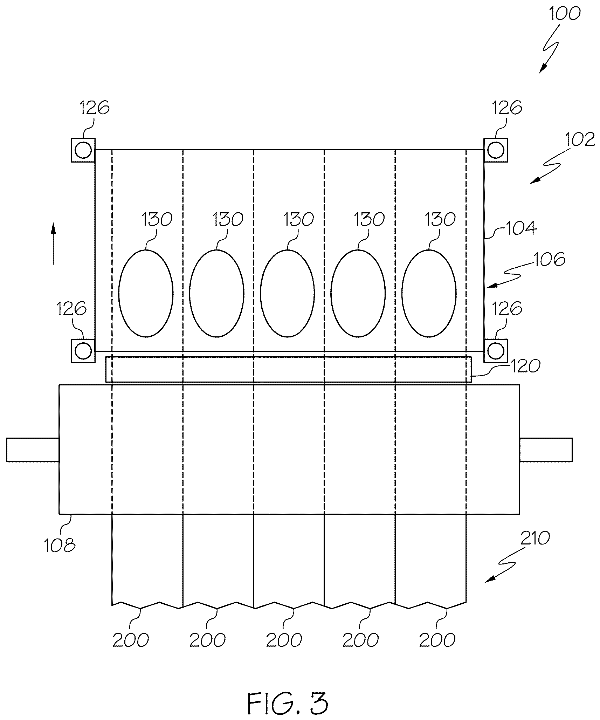

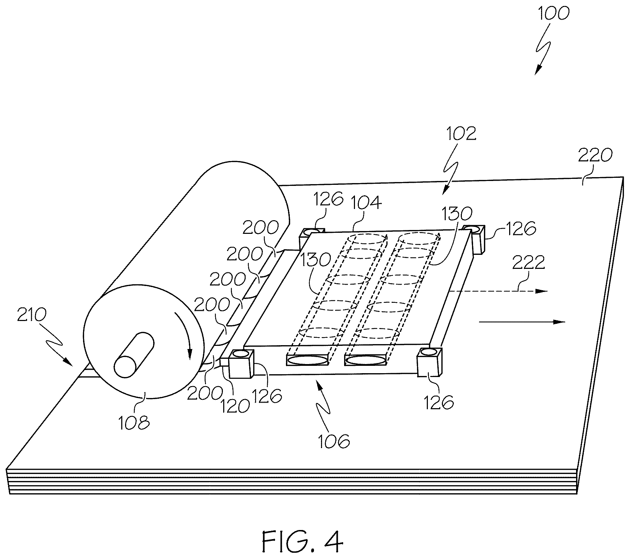

In various examples, heating can occur at the substrate layer just prior to a nip point (e.g., of placement machine 102) or at the nip point, which heats both the substrate layer (e.g., surface 220) and a lower surface of incoming ones of composite tows 200 or just the lower surface of the composite tow 200 being placed. As illustrated in Figs. 3 and 4, in some examples, heat is applied to composite tows 200 and surface 220 (e.g., underlying substrate) upon which composite tows 200 are placed or only to composite tows 200 during placement. For example, a heat source (e.g., heaters 130) is directed into a nip point region of placement machine 102 or the start of contact between roller 108 and surface 220 (e.g., substrate), thereby heating both the lower surface of the incoming composite tows 200 (e.g., partially wrapped around roller 108) and surface 220 (e.g., upper surface of the substrate) at the point of contact. Accordingly, reference to heating each one of composite tows 200 is not limited to heating only the composite tows and, in some examples, also includes heating at least a portion of the underlying surface upon which the composite tows are placed.

In one or more examples, according to method 1000, the step of locally heating each one of the composite tows 200 includes, at 1012, a step of individually controlling each one of heaters 130 according to heating profile 112 of the corresponding one of composite tows 200. In these examples, individual, selective control of each one of heaters 130 applies localized heating to each one (e.g., corresponding one) of composite tows 200 and achieves desired tack 202 of each one (e.g., corresponding one) of composite tows 200.

In one or more examples, method 1000 includes, at 1014, a step of achieving desired tack 202 or other processing conditions for each one of composite tows 200. Achieving desired tack 202 (e.g., optimal level of tack) in prepreg material 212 during placement provides controlled adhesion between the placed tow and the underlying surface 220 or adjacent tows, leading to improved tow conformance, reduced defect formation, and/or enhanced laminate quality.

In one or more examples, method 1000 includes, at 1016, a step of depositing course 210 of composite tows 200 onto surface 220. In these examples, course 210 of two or more of composite tows 200 is simultaneously placed on surface 220. In one or more examples, according to method 1000, the step of localized heating of each one of composite tows 200 occurs immediately prior to or concurrently with the step of depositing course 210 of composite tows 200 onto surface 220.

In one or more examples, method 1000 includes, at 1018, a step of detecting actual temperature 162 of each one of the composite tows 200. In one or more examples, method 1000 includes, at 1020, a step of adjusting heating profile 112 of at least one of composite tows 200 based on feedback from actual temperature 162. In these examples, actively detecting actual temperature 162 (e.g., the real-time material temperature 204) of each one of composite tows 200 and adjusting heating profile 112 of any one of composite tows 200 during the placement process enables real-time thermal feedback control, resulting in more precise heating management, improved placement quality, and reduction of thermal-induced defects.

In one or more examples, according to method 1000, heating profile 112, corresponding to each one of composite tows 200, is constant along path 222 of the corresponding one of composite tows 200. In these examples, each composite tow 200 has the same or substantially the same material history 124 and maintains the same or substantially the same desired tack 202 along path 222 when placing course 210.

In one or more examples, according to method 1000, heating profile 112, corresponding to each one of composite tows 200, is variable along path 222 of the corresponding one of composite tows 200. In these examples, one or more of composite tows 200 has a different material history 124 and has a different desired tack 202 along path 222 when placing course 210. The ability to actively vary heating profile 112 of each one of composite tows 200 during placement enables precise thermal management along complex paths, resulting in improved tow-to-surface adhesion or bonding, reduced defect rates (such as voids, wrinkles, or poor interlaminar adhesion), and/or enhanced laminate structural integrity.

In one or more examples, according to method 1000, desired tack 202 for at least one of composite tows 200 is different than desired tack 202 for at least another one of composite tows 200. During placement of prepreg materials 212, desired tack 202 (e.g., the required level of tack or the prepreg's stickiness or adhesion to the underlying surface 220 or neighboring composite tows) can vary depending on local placement conditions. Being able to control and vary tack levels during the placement process offers several important technical advantages, including improved tow conformability, minimized material distortion, adaption to varying surface temperatures, and the like.

In one or more examples, according to method 1000, each one of the composite tows 200 includes fiber 206 that is pre-impregnated with matrix 208. In one or more examples, according to method 1000, at least one of fiber 206 and matrix 208 of one of composite tows 200 is different than at least one of fiber 206 and matrix 208 of at least another one of composite tows 200.

In one or more examples, a first portion of composite tows 200 (e.g., 75% of the tows in a 16 or 32 tow course) are fiber carbon fiber-based tows and a second portion of composite tows 200 (e.g., remaining 25%) are either fiberglass or Kevlar, to form a hybrid material. In these examples, the different materials may have different heat absorption properties that require a different heat input 142 than the other tows. For example, while the graphite tows readily absorb IR energy, fiberglass or Kevlar tow may reflect more energy, thereby requiring greater input values to achieve the same material temperature. In this situation, greater power would need to be applied for the resin to reach the same temperature as the tows with carbon fiber reinforcement.

In other examples, independent control of tow temperatures is beneficial when a portion of course 210 and/or a ply boundary overhangs the substrate plies and the ply being placed extends past the previously placed plies onto a bare tool. Power settings for composite tows 200 placed on the bare tool may be different than those for composite tows 200 being placed on previously placed plies. The previously placed plies insulate and/or isolate prepreg material 212 from a heat sink of the tool surface and reduce the need for power (e.g., heat output 144). If part of course 210 overhangs the previous placed plies, the overhanging one of composite tows 200 may need more power (e.g., heat input 142) to achieve the same amount of tack.

In yet other examples, system 100 includes or utilizes a single heater, but the condition of each composite tow 200 is evaluated and an optimal heater solution for all composite tows 200 can be selected based on any limitations an individual composite tow 200 may introduce. In yet other examples, the layup or placement process is paused, and the temperature of composite tows 200 is reduced to a storage temperature (e.g., composite tows 200 situated in placement machine 102 are placed in freezer). In these examples, those composite tows 200 that have already been placed may have aged or increased in material out time 114. As such, a first ply of composite tows 200 subsequently placed onto this aged substrate may need different heater settings (e.g., heat output 144 or heat input 142).

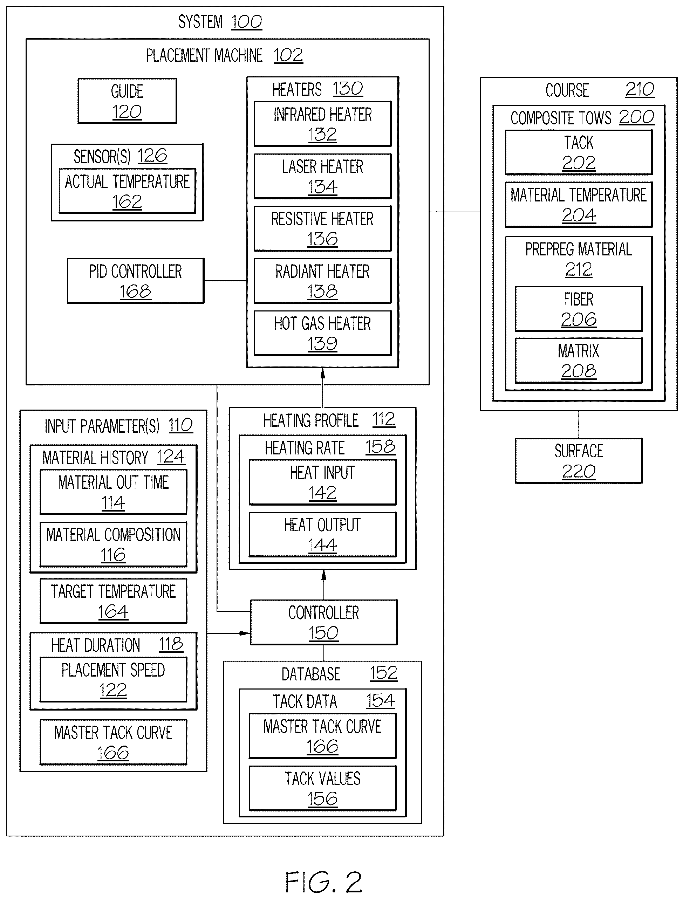

Referring now to Figs. 2-5 by way of examples, the present disclosure is directed to system 100 for selectively controlling tack of composite tows during placement. The following are examples of system 100, according to the present disclosure. In one or more examples, method 1000 is performed or implemented using system 100. Examples of the system 100 include a number of elements, features, and components or combinations thereof. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

As illustrated in Figs. 2-5, in one or more examples, system 100 includes placement machine 102 and controller 150. In these examples, placement machine 102 and controller 150 enable automated placement of composite tows 200 and ensures high precision, repeatability, and efficiency in manufacturing complex composite parts.

In one or more examples, placement machine 102 includes, takes the form of, or is referred to as an automated fiber placement (AFP) machine or tape laying machine. Placement machine 102 is configured or used to precisely lay down strips of composite material, such as in the form of composite tows 200 or composite take, onto a tool, a mold, a previously placed ply or layer, or other surface (e.g., surface 220) to build composite structures. In one or more examples, placement machine 102 dispenses continuous strips, tape, or tows of prepreg material 212 (e.g., pre-impregnated composite material, such as carbon fiber with resin) from a creel or spool, guiding the composite tows through a delivery head to the target surface. In one or more examples, placement machine 102 controls the placement of the tows along predefined paths (e.g., path 222), ensuring alignment with design geometry. In one or more examples, accurate positioning is achieved using robotic arms, gantries, or CNC systems for multi-axis movement. In one or more examples, placement machine 102 also includes placement head 104 that guides composite tows 200 and that applies pressure to compact composite tows 200 onto surface 220, ensuring adhesion and minimizing voids or defects. In one or more examples, placement machine 102 also includes a cutter that cuts composite tows 200 at precise points to match the design and restarts placement as needed, allowing for complex shapes and contours without material waste.

In one or more examples, placement machine 102 (e.g., placement head 104) includes guide 120, heater assembly 106, and roller 108. Guide 120 dispenses (e.g., is configured to dispense) course 210 of composite tows 200 onto surface 220. Heater assembly 106 includes and a plurality of heaters 130. Each one of heaters 130 is independently controllable and is positioned to locally heat a corresponding one of composite tows 200. Roller 108 compacts composite tows 200 on surface 220.

The placement head 104 is configured to place course 210 of two or more composite tows 200 (e.g., 16-tows, 32-tows, etc.) simultaneously. The placement head 104 includes a number of heaters 130 that corresponds to the number of composite tows 200. The examples illustrated in Figs. 3 and 4 depict five heaters 130 and five composite tows 200 for illustrative purposes only and not by way of limitation.

In one or more examples, controller 150 is adapted (e.g., programmed or configured) to receive one or more input parameters 110 for each one of composite tows 200. In one or more examples, controller 150 is adapted (e.g., programmed or configured) to determine, based on input parameter 110, heating profile 112 for each one of composite tows 200 to achieve desired tack 202 for each one of composite tows 200.

In one or more examples, controller 150 is adapted (e.g., programmed or configured) to individually control each one of heaters 130 according to heating profile 112 of the corresponding one of composite tows 200 to apply localized heating to each one of composite tows 200 and achieve desired tack 202.

In one or more examples, one or more of heaters 130 includes infrared heater 132. In one or more examples, one or more of heaters 130 includes laser heater 134. In one or more examples, one or more of heaters 130 includes resistive heater 136. In one or more examples, one or more of heaters 130 includes radiant heater 138. In one or more examples, one or more of heaters 130 includes hot gas heater 139. In one or more examples, one or more of heaters 130 are the same. In one or more examples, one or more of heaters 130 are different.

In one or more examples, each one of heaters 130 includes or is assigned a dedicated proportional-integral-derivative (PID) controller 168. In one or more examples, PID controller 168 is implanted by or forms a portion of controller 150. In one or more examples, PID controller 168 is a feedback control system used to continuously calculate an error value as the difference between a desired setpoint (e.g., target temperature 164) and a measured process variable (e.g., material temperature 204) and adjusts the process input (e.g., heating rate 158) to minimize that error over time.

In one or more examples, heater assembly 106 is a commercially available heater system currently available from Electroimpact, Inc. of Mukilteo, Washington, USA. In one or more examples, heater assembly 106 includes an array of between 16 to 32 individually controllable diode heating elements (e.g., heaters 130). Each diode corresponds to a distinct tow within a 16-tow to 32-tow placement head (e.g., placement head 104), enabling independent thermal control of each tow during layup. Heating profile 112 for each composite tow 200 is selectively modulated in real time based on a corresponding material out-time 114.

In one or more examples, system 100 includes one or more sensors 126. Sensors 126 are positioned and/or configured to measure or otherwise detect actual temperature 162 (e.g., material temperature 204 of each one of composite tows 200) during placement. In these examples, temperature data generated by sensors 126 is transmitted to controller 150 and is used to control or adjust heating rate 158.

Fig. 5 illustrates an example of data processing system 900. In one or more examples, the controller 150 (Fig. 2) includes or takes the form of data processing system 900. In one or more examples, the data processing system 900 includes communications framework 902, which provides communications between at least one processor 904, one or more storage devices 916, such as memory 906 and/or persistent storage 908, communications unit 910, input/output unit 912 (I/O unit), and display 914. In this example, communications framework 902 takes the form of a bus system. Processor 904 serves to execute instructions from software or other applications that can be loaded into memory 906. In one or more examples, processor 904 is a number of processor units, a multi-processor core, or some other type of processor, depending on the particular implementation. Memory 906 and persistent storage 908 are examples of storage devices 916. A storage device is any piece of hardware that is capable of storing information, such as, for example, without limitation, at least one of data, program code in functional form, or other suitable information either on a temporary basis, a permanent basis, or both on a temporary basis and a permanent basis. Storage devices 916 may also be referred to as computer-readable storage devices in one or more examples. Memory 906 is, for example, a random-access memory or any other suitable volatile or non-volatile storage device. Persistent storage 908 can take various forms, depending on the particular implementation. For example, persistent storage 908 contains one or more components or devices. For example, persistent storage 908 is a hard drive, a solid-state hard drive, a flash memory, a rewritable optical disk, a rewritable magnetic tape, or some combination of the above. The media used by persistent storage 908 also can be removable. For example, a removable hard drive can be used for persistent storage 908.

Communications unit 910 provides for communications with other systems or devices, such as placement machine 102 or other computer systems. In one or more examples, communications unit 910 is a network interface card. Input/output unit 912 allows for input and output of data with other devices that can be connected to data processing system 900. As an example, input/output unit 912 provides a connection for user input through at least one of a keyboard, a mouse, or some other suitable input device. Further, input/output unit 912 can send output to a printer. Display 914 provides a mechanism to display information to a user.

Instructions for at least one of the operating system, applications, or programs can be located in storage devices 916, which are in communication with processor 904 through communications framework 902. Control or instruction of the processes of the various examples and operations described herein can be performed by processor 904 using computer-implemented instructions, which can be located in a memory, such as memory 906. The instructions can be referred to as program code, computer usable program code, or computer readable program code that can be read and executed by a processor of processor 904. The program code in the different examples can be embodied on different physical or computer readable storage media, such as memory 906 or persistent storage 908.

In one or more examples, program code 918 is located in a functional form on computer-readable media 920 that is selectively removable and can be loaded onto or transferred to the data processing system 900 for execution by the processor 904. In one or more examples, the program code 918 and computer-readable media 920 form the computer program product 922. In one or more examples, computer-readable media 920 is computer-readable storage media 924. In one or more examples, computer-readable storage media 924 is a physical or tangible storage device used to store program code 918 rather than a medium that propagates or transmits the program code 918. Alternatively, program code 918 can be transferred to data processing system 900 using a computer-readable signal media. The computer-readable signal media can be, for example, a propagated data signal containing program code 918. For example, computer-readable signal media can be at least one of an electromagnetic signal, an optical signal, or any other suitable type of signal. These signals can be transmitted over at least one of communications links, such as wireless communications links, optical fiber cable, coaxial cable, a wire, or any other suitable type of communications link.

The different components illustrated for data processing system 900 are not meant to provide architectural limitations in the manner in which different examples can be implemented. The different examples can be implemented in a data processing system including components in addition to or in place of those illustrated for data processing system 900. Other components shown in Fig. 5 can be varied from the examples shown. The different examples can be implemented using any hardware device or system capable of running program code 918.

Additionally, various components of controller 150, data processing system 900, and/or program code 918 may be described as modules or applications. For the purpose of the present disclosure, the term "module" includes hardware, software or a combination of hardware and software. As an example, a module can include one or more circuits configured to perform or execute the described functions or operations of the executed processes described herein (e.g., the method 1000). As another example, a module includes a processor, a storage device (e.g., a memory), and computer-readable storage medium having instructions that, when executed by the processor causes the processor to perform or execute the described functions and operations. In one or more examples, a module takes the form of program c>

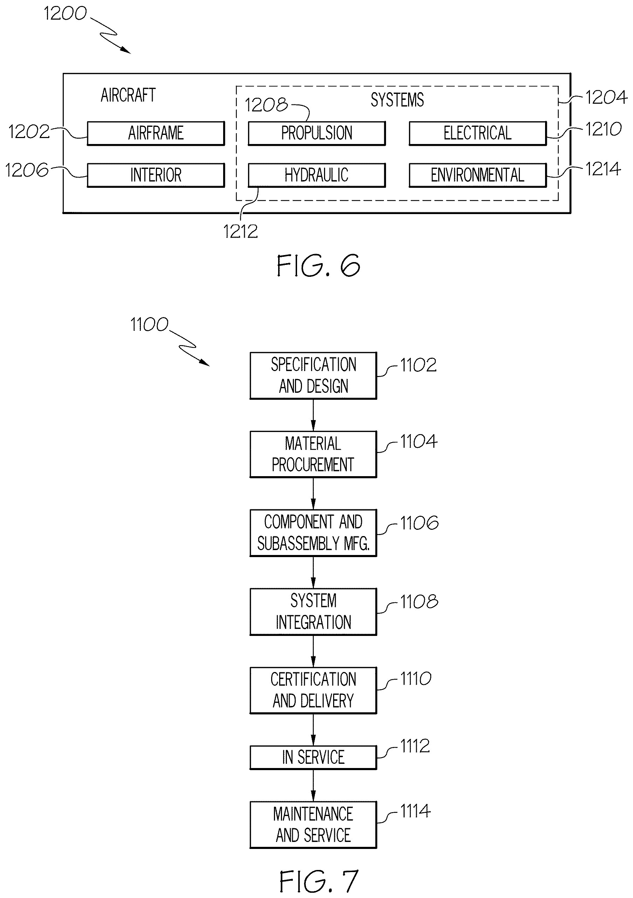

Referring now to Figs. 6 and 7 examples of method 1000 and system 100, described herein, may be related to, or used in the context of, aircraft 1200, as schematically illustrated in Fig. 6, and aerospace manufacturing and service method 1100, as shown in the flow diagram of Fig. 7. As an example, aircraft 1200 and/or manufacturing and service method 1100 may utilize composite components that have been formed or produced according to method 1000 and/or using system 100. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to manufacturing composite components of various types of vehicles, such as land, sea, rail, and space-based vehicles, of various types of buildings, and/or in the manufacture of various types of industrial and/or consumer products.

Referring to Fig. 6, which illustrates an example of aircraft 1200. Aircraft 1200 can be any aerospace vehicle or platform such as, but not limited to, a fixed wing aircraft, a rotorcraft, a vertical takeoff and landing (VTOL) aircraft, an unmanned aerial vehicle (UAV) or drone, commercial, passenger, or military aircraft, and the like. In one or more examples, aircraft 1200 includes airframe 1202 having interior 1206. Aircraft 1200 includes a plurality of onboard systems 1204 (e.g., high-level systems). Examples of onboard systems 1204 of aircraft 1200 include propulsion systems 1208, hydraulic systems 1212, electrical systems 1210, and environmental systems 1214. In other examples, onboard systems 1204 also includes one or more control systems coupled to airframe 1202 of aircraft 1200. In yet other examples, onboard systems 1204 also include one or more other systems, such as, but not limited to, communications systems, avionics systems, software distribution systems, network communications systems, passenger information/entertainment systems, guidance systems, radar systems, weapons systems, and the like. Aircraft 1200 can include a number of composite components that are manufactured using system 100 and/or according to method 1000.

Referring to Fig. 7, during pre-production of aircraft 1200, at 1102, the manufacturing and service method 1100 includes specification and design of aircraft 1200 and, at 1104, material procurement. During production of aircraft 1200, at 1106, component and subassembly manufacturing of aircraft takes place and, at 1108, system integration of aircraft 1200 takes place. Thereafter, at 1110, aircraft 1200 goes through certification and delivery and, at 1112, is placed in service. At 1114, routine maintenance and service of aircraft 1200 includes modification, reconfiguration, refurbishment, etc. of one or more systems of aircraft 1200.

Each of the processes of manufacturing and service method 1100 illustrated in Fig. 7 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of method 1000 and system 100, shown and described herein, may be employed during any one or more of the stages of manufacturing and service method 1100 shown in the flow diagram illustrated by Fig. 7. In an example, composite components of aircraft 1200 can be manufactured according to method 1000 and/or using system 100 during a portion of component and subassembly manufacturing (1106) and/or system integration (1108). Further, composite components of aircraft 1200 can be manufactured according to method 1000 and/or using system 100 while aircraft 1200 is in service (1112). Also, composite components of aircraft 1200 can be manufactured according to method 1000 and/or using system 100 during system integration (1108) and certification and delivery (1110). Similarly, composite components of aircraft 1200 can be manufactured according to method 1000 and/or using system 100 while aircraft 1200 is in service (1112) and during maintenance and service (1114).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example", "another example", "one or more examples" and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 2-6, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 2-6, referred to above, need to be included in every example and not all elements, features, and/or components described herein are necessarily depicted in each illustrative example. Accordingly, some of the elements, features, and/or components described and illustrated in Figs. 2-6 may be combined in various ways without the need to include other features described and illustrated in Figs. 2-6, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 2-6, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 2-6, and such elements, features, and/or components may not be discussed in detail herein with reference to each of Figs. 2-6. Similarly, all elements, features, and/or components may not be labeled in each of Figs. 2-6, but reference numerals associated therewith may be utilized herein for consistency.

In Figs. 1 and 7, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 1 and 7 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need to be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of method 1000 and system 100 have been shown and described, modifications may occur to those skilled in the art upon reading the specification. The present application includes such modifications and is limited only by the scope of the claims.

Further examples are set out in the following clauses.

Clause 1. A method (1000) comprising:
receiving an input parameter (110) for each one of a plurality of composite tows (200);
determining, based on the input parameter (110), a heating profile (112) for each one of the composite tows (200) to achieve a desired tack (202) for each one of the composite tows (200); and
locally heating each one of the composite tows (200) according to the heating profile (112) of a corresponding one of the composite tows (200) thereby achieving the desired tack (202) for each one of the composite tows (200).

Clause 2. The method (1000) of Clause 1, wherein the input parameter (110) comprises one of a material out-time (114), a material composition (116), or a heat duration (118) corresponding to each one of the composite tows (200).

Clause 3. The method (1000) of Clause 2, wherein the heat duration (118) is based on a placement speed (122) of a course (210) of the composite tows (200).

Clause 4. The method (1000) of any of Clauses 1 to 3, wherein:
the input parameter (110) is one of a plurality of input parameters (110); and
the input parameters (110) comprise at least two of material out-time (114), material composition (116), and heat duration (118) corresponding to each one of the composite tows (200).

Clause 5. The method of any of Clauses 1 to 4, wherein the heating profile (112), corresponding to each one of the composite tows (200), is constant along a path (222) of the corresponding one of the composite tows (200).

Clause 6. The method of any of Clauses 1 to 5, wherein the heating profile (112), corresponding to each one of the composite tows (200), is variable along a path (222) of the corresponding one of the composite tows (200).

Clause 7. The method of any of Clauses 1 to 6, further comprising:
detecting an actual temperature (162) of each one of the composite tows (200); and
adjusting the heating profile (112) of at least one of the composite tows (200) based on feedback from the actual temperature (162).

Clause 8. The method of any of Clauses 1 to 7, wherein each one of the composite tows (200) comprises fiber (206) pre-impregnated with a matrix (208).

Clause 9. The method of Clause 8, wherein at least one of the fiber (206) and the matrix (208) of one of the composite tows (200) is different than at least one of the fiber (206) and the matrix (208) of at least another one of the composite tows (200).

Clause 10. The method of any of Clauses 1 to 9, further comprising depositing a course (210) of the composite tows (200) onto a surface (220).

Clause 11. The method of Clause 10, wherein the localized heating of each one of the composite tows (200) occurs immediately prior to or concurrently with depositing the course (210) of the composite tows (200) onto the surface (220).

Clause 12. The method of any of Clauses 1 to 11, wherein locally heating each one of the composite tows (200) comprises individually controlling each one of a plurality of heaters (130) according to the heating profile (112) of the corresponding one of the composite tows (200).

Clause 13. The method of Clause 12, wherein each one of the heaters (130) comprises one of: an infrared heater (134), a laser heater (136), a resistive heater (136), a radiant heater (138), or a hot gas heater (139).

Clause 14. The method of any of Clauses 1 to 13, wherein determining the heating profile (112) for each one of the composite tows (200) comprises:
retrieving pre-established tack data (154) from a database (152) based on the input parameter (110); and
determining a heating rate (158) needed to achieve the desired tack (202) based on the pre-established tack data (154) of a corresponding one of the composite tows (200).

Clause 15. The method of Clause 14, wherein the pre-established tack data (154) comprises tack values (156) as a function of at least one of material out-time (114) and material composition (116) and shifted as a function of placement speed (122) and material temperature (204).

Clause 16. The method of any of Clauses 1 to 15, wherein the desired tack (202) for at least one of the composite tows (200) is different than the desired tack (202) for at least another one of the composite tows (200).

Clause 17. A method (1000) for achieving a desired tack (202) for each one of a plurality of composite tows (200) during placement, the method (1000) comprising:
determining, based on at least one input parameter (110), a heating profile (112) for each one of the composite tows (200) to achieve the desired tack (202) for each one of the composite tows (200); and
differentially heating the composite tows (200) according to the heating profile (112) of each one of the composite tows (200).

Clause 18. The method (1000) of Clause 17, wherein the input parameter (110) comprises a material out-time (114) corresponding to each one of the composite tows (200).

Clause 19. A system (100) comprising:
a placement machine (102) comprising:
a guide (120) that dispenses a course (210) of composite tows (200) onto a surface (220); and
a plurality of heaters (130), each one of the heaters (130) is independently controllable and is positioned to locally heat a corresponding one of the composite tows (200);
   and
a controller (150) adapted to:
   receive an input parameter (110) for each one of the composite tows (200);
   determine, based on the input parameter (110), a heating profile (112) for each one of the composite tows (200) to achieve a desired tack (202) for each one of the composite tows (200); and
   individually control each one of the heaters (130) according to the heating profile (112) of the corresponding one of the composite tows (200) to apply localized heating to each one of the composite tows (200) and achieve the desired tack (202).

Clause 20. The system (100) of Clause 19, wherein the input parameter (110) comprises one of a material out-time (114), a material composition (116), or a heat duration (118) corresponding to each one of the composite tows (200).

## Claims

1. A method (1000) comprising:
receiving an input parameter (110) for each one of a plurality of composite tows (200);
determining, based on the input parameter (110), a heating profile (112) for each one of the composite tows (200) to achieve a desired tack (202) for each one of the composite tows (200);
locally heating each one of the composite tows (200) according to the heating profile (112) of a corresponding one of the composite tows (200); and
achieving the desired tack (202) for each one of the composite tows (200).

2. The method (1000) of Claim 1, wherein the input parameter (110) comprises one of a material out-time (114), a material composition (116), or a heat duration (118) corresponding to each one of the composite tows (200).

3. The method (1000) of Claim 2, wherein the heat duration (118) is based on a placement speed (122) of a course (210) of the composite tows (200).

4. The method (1000) of any of Claims 1 to 3, wherein:
the input parameter (110) is one of a plurality of input parameters (110); and
the input parameters (110) comprise at least two of material out-time (114), material composition (116), and heat duration (118) corresponding to each one of the composite tows (200).

5. The method of any of Claims 1 to 4, wherein the heating profile (112), corresponding to each one of the composite tows (200), is either constant or variable along a path (222) of the corresponding one of the composite tows (200).

6. The method of any of Claims 1 to 5, further comprising:
detecting an actual temperature (162) of each one of the composite tows (200); and
adjusting the heating profile (112) of at least one of the composite tows (200) based on feedback from the actual temperature (162).

7. The method of any of Claims 1 to 6, wherein each one of the composite tows (200) comprises fiber (206) pre-impregnated with a matrix (208).

8. The method of Claim 7, wherein at least one of the fiber (206) and the matrix (208) of one of the composite tows (200) is different than at least one of the fiber (206) and the matrix (208) of at least another one of the composite tows (200).

9. The method of any of Claims 1 to 8, further comprising depositing a course (210) of the composite tows (200) onto a surface (220).

10. The method of Claim 9, wherein the localized heating of each one of the composite tows (200) occurs immediately prior to or concurrently with depositing the course (210) of the composite tows (200) onto the surface (220).

11. The method of any of Claims 1 to 10, wherein:
locally heating each one of the composite tows (200) comprises individually controlling each one of a plurality of heaters (130) according to the heating profile (112) of the corresponding one of the composite tows (200); and, optionally,
each one of the heaters (130) comprises one of: an infrared heater (134), a laser heater (136), a resistive heater (136), a radiant heater (138), or a hot gas heater (139).

12. The method of any of Claims 1 to 11, wherein determining the heating profile (112) for each one of the composite tows (200) comprises:
retrieving pre-established tack data (154) from a database (152) based on the input parameter (110); and
determining a heating rate (158) needed to achieve the desired tack (202) based on the pre-established tack data (154) of a corresponding one of the composite tows (200).

13. The method of Claim 12, wherein the pre-established tack data (154) comprises tack values (156) as a function of at least one of material out-time (114) and material composition (116) and shifted as a function of placement speed (122) and material temperature (204).

14. The method of any of Claims 1 to 13, wherein the desired tack (202) for at least one of the composite tows (200) is different than the desired tack (202) for at least another one of the composite tows (200).

15. A system (100) comprising:
a placement machine (102) comprising:
a guide (120) that dispenses a course (210) of composite tows (200) onto a surface (220); and
a plurality of heaters (130), each one of the heaters (130) is independently controllable and is positioned to locally heat a corresponding one of the composite tows (200);
and
a controller (150) adapted to perform the method of any of Claims 1 to 14.
